# EUROPÄISCHE PATENTANMELDUNG

(11) **EP 2 570 743 A1**
(43) Veröffentlichungstag der Anmeldung: **20.03.2013**
(21) Anmeldenummer: 11181489.3
(22) Anmeldetag: 15.09.2011
(51) Int. Cl.: F24F 11/00, G05B 19/042

(54) **Verfahren zur Zuordnung eines Kommunikationsweges zwischen zwei Komponenten eines klima- und raumlufttechnischen Anlagesystems zu einer, insbesondere erst noch zu bildenden, Kommunikationsgruppe**

(71) Anmelder: TROX GmbH, 47506 Neukirchen-Vluyn (DE)
(72) Erfinder: Sefker, Thomas, 47506 Neukirchen-Vluyn (DE); Lange, Stefan, 47506 Neukirchen-Vluyn (DE)
(74) Vertreter: DR. STARK & PARTNER

(57) **Zusammenfassung**

Die Erfindung betrifft ein Verfahren zur Zuordnung eines Kommunikationsweges zwischen zwei Komponenten eines klima- und raumlufttechnischen Anlagesystems zu einer, insbesondere erst noch zu bildenden, Kommunikationsgruppe. Um ein Verfahren anzugeben, in dem Komponenten einfacher ausgetauscht und auch weitere Komponenten einfacher hinzugefügt werden können, sollen zumindest die zwei Komponenten zu einer Kommunikationsgruppe zusammengefasst werden, innerhalb der jede der Kommunikationsgruppe zugeordnete Komponente mit wenigstens einer anderen Komponente dieser Kommunikationsgruppe in wenigstens einer Richtung, vorzugsweise bidirektional, kommunizieren kann, wobei die Bereitschaft eines Beitritts zu einer Kommunikationsgruppe bei den beiden Komponenten gegeben ist und dass an einer der zwei Komponenten, die der vorgenannten Kommunikationsgruppe zugeordnet werden soll, durch einen Impuls, z.B. Tastenimpuls, die Zuordnung zur insbesondere zu bildenden Kommunikationsgruppe initiiert wird, die Kommunikationsgruppenzughörigkeit in der Einstellung der ersten der zwei Komponenten und/oder der Einstellung der zweiten der zwei Komponenten festgelegt wird.

## Beschreibung

Die Erfindung betrifft ein Verfahren zur Zuordnung eines Kommunikationsweges zwischen zwei Komponenten eines klima- und raumlufttechnischen Anlagesystems zu einer, insbesondere erst noch zu bildenden, Kommunikationsgruppe.

Klima- und raumlufttechnische Anlagesysteme weisen insbesondere in großen Gebäuden eine Vielzahl an Komponenten auf. Innerhalb dieses Anlagesystems bestehen festgelegte Kommunikationsgruppen auch unterschiedlicher "Hierarchien". Jede Kommunikationsgruppe besteht aus verschiedenen Komponenten. Damit die Komponenten untereinander kommunizieren können, ist eine Zuordnung zwischen den einzelnen Komponenten entweder über eine Analogverdrahtung oder über Netzwerke erforderlich. Für den einwandfreien Betrieb des Anlagesystems müssen die Kommunikationswege definiert werden. Der Austausch einzelner Komponenten ist aufwändig, da beispielsweise für die Zuordnung einer neuen Komponente zu einer bereits bestehenden Kommunikationsgruppe die Gebäudeleittechnik entsprechend geändert werden muss, damit die neu ergänzte Komponente in die Kommunikationsgruppe integriert ist.

Aufgabe der Erfindung ist es, die vorgenannten Nachteile zu vermeiden und ein Verfahren anzugeben, in dem Komponenten einfacher ausgetauscht und auch weitere Komponenten einfacher hinzugefügt werden können.

Diese Aufgabe wird dadurch gelöst, dass zumindest die zwei Komponenten zu einer Kommunikationsgruppe zusammengefasst werden, innerhalb der jede der Kommunikationsgruppe zugeordnete Komponente mit wenigstens einer anderen Komponente dieser Kommunikationsgruppe in wenigstens einer Richtung, vorzugsweise bidirektional, kommunizieren kann, wobei die Bereitschaft eines Beitritts zu einer Kommunikationsgruppe bei den beiden Komponenten gegeben ist und dass an einer der zwei Komponenten, die der vorgenannten Kommunikationsgruppe zugeordnet werden soll, durch einen Impuls, z.B. Tastenimpuls, die Zuordnung zur insbesondere zu bildenden Kommunikationsgruppe initiiert wird, die Kommunikationsgruppenzughörigkeit in der Einstellung der ersten der zwei Komponenten und/oder der Einstellung der zweiten der zwei Komponenten festgelegt wird.

Für die Durchführung des erfindungsgemäßen Verfahrens sind zumindest zwei Komponenten erforderlich, wobei zumindest eine Komponente in wenigstens einer Richtung mit der anderen Komponente kommunizieren kann. Bei beiden Komponenten ist die Bereitschaft eines Beitritts zu einer Kommunikationsgruppe gegeben. Durch einen Impuls, wie z.B. einen Tastenimpuls, wird an einer der zwei Komponenten die Zuordnung initiiert, wobei die Kombinationsgruppenzugehörigkeit dann in den Einstellungen der ersten der zwei Komponenten oder in der Einstellung der zweiten der zwei Komponenten oder in den Einstellungen der ersten und der zweiten Komponente festgelegt wird. Bei der Einstellung kann es sich um eine Speichereinrichtung handeln.

Zur Erzeugung eines Impulses kann beispielsweise eine als Taste ausgebildete Konfigurationseinrichtung vorgesehen sein. Der Zuordnungsvorgang wird erst dann beendet, wenn alle Komponenten, die zu der betreffenden Kommunikationsgruppe zugeordnet werden sollen, zugeordnet sind.

Damit können beliebig viele Komponenten zu einer Kommunikationsgruppe innerhalb eines klima- und raumlufttechnischen Anlagesystems zusammengefasst werden. Sofern eine Komponente nicht nur eine Empfangseinrichtung sondern auch eine Sendeeinrichtung aufweist, kann eine solche Komponente entweder eine zuzuordnende Komponente oder eine sendende Komponente darstellen, so dass der Zuordnungsvorgang auch über diese Komponente gestartet, d.h. angestoßen, werden kann. Das erfindungsgemäße Verfahren erlaubt auf eine einfache und auch sichere Weise eine Zuweisung von Komponenten zu einer Kommunikationsgruppe.

Die nach der Beendigung des Zuordnungsprozesses hergestellte Verbindung der Komponenten einer Kommunikationsgruppe untereinander kann beliebig ausgebildet sein. So können beispielsweise 1:1-Verbindungen zwischen jeweils zwei Komponenten einer Kommunikationsgruppe hergestellt worden sein. Bei einem solchen Ausführungsbeispiel kann beispielsweise einer Komponente eine Masterfunktion zukommen, während alle anderen Komponenten dieser Kommunikationsgruppe durch eine 1:1-Verbindung mit der die Masterfunktion zukommenden Komponente verbunden sind. Daher wird auch eine Sternstruktur als Gruppe angesehen, bei der die einzelnen Komponenten nur mit der "Master"-Komponente verbunden sind. Unter einer Kommunikation wird verstanden, dass eine einzelne Komponente nur empfangen kann oder nur senden kann oder gleichzeitig senden und auch empfangen kann.

Selbstverständlich können auch alle Komponenten der Kommunikationsgruppe so untereinander verbunden sein, dass jede Komponente mit jeder anderen Komponente dieser Kommunikationsgruppe kommunizieren kann.

Damit ist eine Interaktion zwischen den einzelnen Komponenten dieser Kommunikationsgruppe hergestellt. Eine einzelne Komponente dieser Kommunikationsgruppe kann nur Daten einer anderen zu dieser Kommunikationsgruppe gehörenden Komponente empfangen, so dass es sich dann um eine unidirektionale Verbindung handelt. Es ist aber möglich, dass eine einzelne Komponente nach der Zuordnung Daten sowohl empfangen als auch senden kann und dann eine bidirektionale Verbindung mit der(den) betreffenden anderen Komponente(n) besteht.

Eine bereits bestehende Zuordnung kann auch geändert werden, indem der zuvor beschriebene Zuordnungsprozess erneut durchgeführt wird. Das erfindungsgemäße Verfahren erlaubt eine einfache Systeminstallation ohne Nutzung einer eventuell vorhandenen zentralen Gebäudeleittechnik.

Bei einer Ausführungsform des erfindungsgemäßen Verfahrens bietet sich an, wenn vor der eigentlichen Zuordnung zur, insbesondere zu bildenden, Kommunikationsgruppe durch den Impuls zumindest eine Komponente ein Signal aussendet, das die Bereitschaft eines Beitritts zu einer Kommunikationsgruppe, welche diese sendende Komponente umfasst, erklärt. Für den Zuordnungsvorgang sendet beispielsweise die erste Komponente nach Aktivierung, z.B. durch einen Tastenimpuls, ein Signal aus, das die Bereitschaft eines Beitritts zu einer Kommunikationsgruppe, welche diese sendende Komponente umfasst, erklärt.

An einer weiteren Komponente, die der vorgenannten Kommunikationsgruppe zugeordnet werden soll, wird durch einen Impuls, z.B. Tastenimpuls, die Zuordnung zur Kommunikationsgruppe, d.h. zur der ersten Komponente, initiiert.

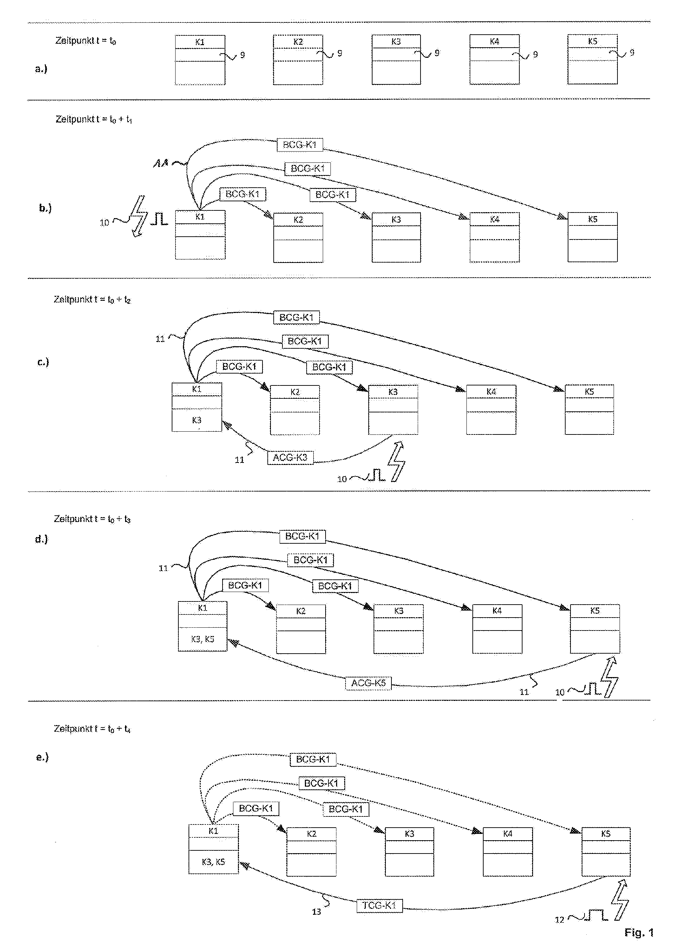

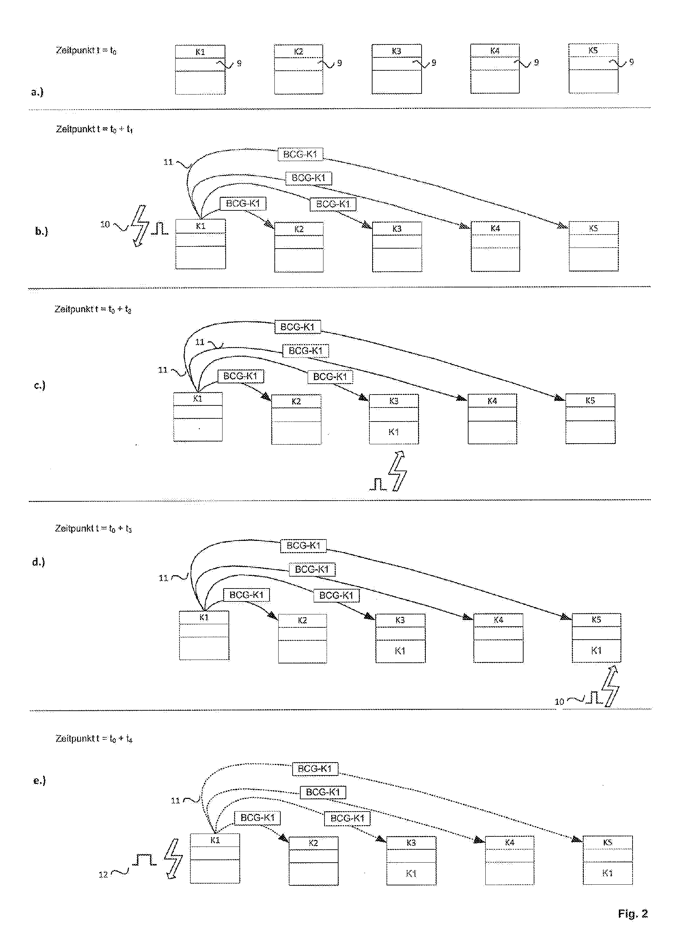

Die Kommunikationsgruppenzughörigkeit wird dann entweder - wie in Fig. 1 gezeigt - in der Einstellung der ersten Komponente oder - wie in Fig. 2 gezeigt - in der Einstellung der betreffenden weiteren Komponente festgelegt.

Das Aussenden des Signals, vorzugsweise an der sendenden Komponente, kann optisch und/oder akustisch angezeigt werden.

Nach Abschluss der Zuordnung aller gewünschten Komponenten zu einer zu bildenden Kommunikationsgruppe kann an einer der dieser Kommunikationsgruppe zugeordneten Komponente, vorzugweise an der sendenden Komponente, das Aussenden des Signals durch einen Impuls, insbesondere durch einen Tastenimpuls, gestoppt werden. Nachdem die gewünschte Zuordnung erfolgt ist, d.h. jede Komponente zu dieser Kommunikationsgruppe zugeordnet worden ist, wird der Vorgang, vorzugweise an der sendenden Komponente, wieder aktiv gestoppt.

Es ist aber auch durchaus möglich, dass der Zuordnungsvorgang automatisch gestoppt wird, da das Aussenden des Signals beispielsweise von der sendenden Komponente zeitlich beschränkt ist.

Nach Abschluss der Zuordnung aller gewünschten Komponenten zu einer zu bildenden Kommunikationsgruppe kann an einer Komponente, vorzugweise an der sendenden Komponente, die Bereitschaft eines Beitritts zu einer Kommunikationsgruppe durch einen Impuls, insbesondere Tastenimpuls, gestoppt werden. Damit wird die "Gruppenbildungsbereitschaft" gestoppt. Dieses kann beispielsweise durch Drücken eines Tasters, mittels dem das Aussenden des Signals aktiviert wurde, erfolgen.

Sofern durch einen vorherigen Impuls eine Komponente in den Empfangszustand versetzt worden ist, befindet sich diese Komponente damit solange in ihrem aktivierten Zustand, bis die Zuordnung aller Komponenten zu einer zu bildenden Kommunikationsgruppe an einer, insbesondere der letzten, weiteren Komponente, gestoppt worden ist. Der aktivierte Zustand kann auch zeitlich beschränkt sein, so dass die Empfangsbereitschaft nach Ablauf der vorgegebenen Zeitdauer automatisch beendet wird.

Unter einem Kommunikationsweg im Sinne der Erfindung werden alle denkbaren Verbindungsarten zwischen den Komponenten verstanden, die eine Kommunikation der zugeordneten Komponenten einer Kommunikationsgruppe untereinander ermöglichen. Die Verbindung zwischen zumindest zwei Komponenten kann beispielsweise drahtlos, insbesondere funkbasiert, ausgebildet sein. Bei der Verbindung zwischen den Komponenten kann es sich auch um eine übliche Standardverbindung, wie eine Kabelverbindung, ein Bus-System oder dergleichen, handeln.

Ein Kommunikationsweg kann dabei zwischen zwei oder mehreren Komponenten einer Kommunikationsgruppe bestehen, wobei sämtliche Komponenten dieser Kommunikationsgruppe einer gemeinsamen Hierarchie, wie z.B. einem Raum, angehören können. Es ist aber auch durchaus möglich, dass ein Kommunikationsweg zwischen zwei oder mehreren Komponenten einer Kommunikationsgruppe, wobei die betreffenden Komponenten dieser Kommunikationsgruppe unterschiedlichen Hierarchien angehören, besteht.

Zumindest eine Komponente kann wenigstens eine bei der Durchführung des Zuordnungsprozesses abgefragte und für die Ermöglichung einer Zuordnung relevante funktionale Kommunikationskennung oder auch Identifikationsnummer aufweisen und weiterhin eine weitere Komponente, mit der eine Zuordnung erfolgen soll, eine Speichereinrichtung mit einer kompatiblen Kommunikationskennung oder auch Identifikationsnummer beinhalten und die Zuordnung von der ersten und/oder der weiteren Komponente nur ausgeführt werden, sofern zwischen der Kommunikationskennung der ersten Komponente und der in der Speichereinrichtung der weiteren Komponente hinterlegten Kommunikationskennung Übereinstimmung besteht. Bei einem solchen Ausführungsbeispiel ist zumindest in der Speichereinrichtung einer Komponente hinterlegt, welche weiteren Komponenten überhaupt zugeordnet werden dürfen, so dass keine Zuordnung einer "unberechtigten" Komponente möglich ist.

Die Kommunikationskennung kann beispielswiese Informationen über die "Hierarchie" der Kommunikationsgruppe, zu der diese Komponente möglicherweise zugeordnet werden kann, und/oder Informationen über die Funktion der betreffenden Komponente beinhalten.

Auf diese Weise können beispielsweise "Hierarchien" innerhalb eines klima- und raumlufttechnischen Anlagesystems definiert werden. So kann beispielsweise in einer Komponente in der Kommunikationskennung hinterlegt sein, dass es sich hier um eine Komponente der "Raumebene" handelt. Die Kommunikationskennung kann aber auch eine funktionale Information dahingehend beinhalten, dass sie die Funktion der betreffenden Komponente betrifft.

An einer Komponente kann die für die aktuelle Zuordnung zu einer Kommunikationsgruppe zu verwendende Kommunikationskennung einstellbar sein. Die Kommunikationskennung ist beispielsweise die Seriennummer oder eine andere Angabe zur Identifizierung. Hierdurch kann an der betreffenden Komponente vor der Zuordnung beispielsweise eingestellt werden, auf welcher "Hierarchie" nunmehr eine Kommunikationsgruppe erstellt werden soll.

An zumindest einer weiteren Komponente kann die soeben erfolgte Zuordnung dieser weiteren Komponente zu einer Kommunikationsgruppe optisch und/oder akustisch signalisiert werden.

Ein System einer klima- und raumlufttechnischen Anlage zur Durchführung des erfindungsgemäßen Verfahrens weist zumindest eine erste Komponente, die einer zu bildenden Kommunikationsgruppe zugeordnet werden soll, die eine Einrichtung zum Senden eines Signals, das die Kommunikationsgruppenzughörigkeit in der Einstellung der ersten der zwei Komponenten und/oder der Einstellung der zweiten der zwei Komponenten festlegt, und zumindest eine weitere Komponente, die der vorgenannten Kommunikationsgruppe zugeordnet werden soll, die eine das Signal empfangende Empfangseinrichtung umfasst, wobei für die Festlegung des durch das Signal vorgegebenen Kommunikationsweges die erste Komponente und/oder die weitere Komponente eine entsprechend einstellbare Konfigurationseinrichtung aufweist, umfassen. Bei der Konfigurationseinrichtung kann es sich im einfachsten Fall beispielsweise um einen DIP-Schalter handeln. Selbstverständlich sind auch andere Ausgestaltungen einer Konfigurationseinrichtung möglich. So ist beispielsweise eine Konfiguration über die Funktion einer betreffenden Komponente oder eine andersartige Kodierung möglich.

Das System einer klima- und raumlufttechnischen Anlage zur Durchführung eines Verfahrens kann auch zumindest eine erste Komponente, die der vorgenannten Kommunikationsgruppe zugeordnet werden soll, die eine Einrichtung zur Aktivierung zum Aufbau einer Kommunikationsgruppe aufweist, und zumindest eine weitere Komponente, die der vorgenannten Kommunikationsgruppe zugeordnet werden soll, die eine Einrichtung zum Senden eines Signals, das die Kommunikationsgruppenzughörigkeit in der Einstellung der ersten der zwei Komponenten und/oder der Einstellung der zweiten der zwei Komponenten festlegt, aufweisen, umfassen.

Bei dieser Ausgestaltung wird zur Zuordnung einer ersten Komponente zu einer zweiten Komponente zur Bildung einer Kommunikationsgruppe die erste Komponente aktiviert, d.h. in einen Empfangszustand versetzt, um eine Kommunikationsgruppe aufzubauen. Der ersten Komponente ist hierzu eine Empfangseinrichtung zugeordnet.

Jeder weiteren Komponente, die der vorgenannten Kommunikationsgruppe zugeordnet werden soll, ist eine Einrichtung zum Senden eines Signals, das einen Kommunikationsweg vorgibt, zugeordnet. Die Einrichtung kann beispielsweise als Taster ausgebildet sein. Die weitere Komponente sendet bei Betätigen ein Signal, das eine Identifikation dieser weiteren Komponente ermöglicht, an die erste Komponente aus. Das Signal kann beispielsweise eine Identifikationsnummer oder sonstige Informationen beispielsweise über die Art oder die Funktion der betreffenden weiteren Komponente, die das Signal aussendet, beinhalten. Die erste Komponente empfängt über ihre Empfangseinrichtung dieses Signal und speichert die mit dem Signal empfangenen Informationen in einer ihr zugänglichen Speichereinrichtung. Auf diese Weise ist bei dem zuvor beschriebenen Ausführungsbeispiel der Kommunikationsweg zumindest in der Einstellung der ersten Komponente etabliert.

Nach Abschluss der Zuordnung aller Komponenten zu einer zu bildenden Kommunikationsgruppe kann vorzugsweise an der letzten weiteren Komponente der Empfangszustand gestoppt werden. Dieses kann beispielsweise durch erneutes Drücken des Tasters, mittels dem das Aussenden des Signals aktiviert wurde, erfolgen.

Bei einer unidirektionalen Kommunikation hat damit jede Komponente entweder eine Sendeeinrichtung oder eine Empfangseinrichtung. Sofern eine bidirektionale Kommunikation einer Komponente gewünscht ist, weist diese betreffende Komponente eine Sendeeinrichtung und eine Empfangseinrichtung auf.

Die Verbindung zwischen zwei Komponenten kann drahtlos, insbesondere funkbasiert, ausgebildet sein. Selbstverständlich kann sie auch über Kabel realisiert werden.

Die Sende- und Empfangseinrichtungen sind je nach der Art der Kommunikationsverbindung, wie z.B. Funk-, IR-, Ultraschall- oder Glasfaserverbindung anders ausgebildet. Bei einer Glasfaserverbindung ist die Sendeeinrichtung beispielsweise als LED ausgebildet.

Für eine energieoptimierte Betriebsführung des Systems bietet sich an, wenn zumindest eine Komponente mit einer Regeleinrichtung versehen ist. Eine solche Regeleinrichtung kann mehrere oder auch alle Komponenten der betreffenden Kommunikationsgruppe regeln. Sofern die Komponente, die eine Regeleinrichtung beinhaltet oder der eine Regeleinrichtung zugeordnet ist, mehreren Kommunikationsgruppen zugeordnet ist, ist insoweit eine Regelung mehrerer oder auch aller Komponenten der betreffenden Kommunikationsgruppen möglich. Dabei kann zumindest eine der Komponenten auch als reiner Sensor, wie beispielsweise als Temperaturfühler, ausgebildet sein.

So kann an einem Bediengerät beispielsweise ein bestimmter Sollwert, wie eine gewünschte Temperatur, eingestellt werden. Ausgehend von dem vorgegebenen Sollwert und einem gemessenen Istwert wird beispielsweise ein zu fördernder Sollvolumenstrom ermittelt und entsprechend die Stellung der zuständigen Zuluftvolumenstromregler sowie die Leistung des Zuluftventilators eingestellt.

Selbstverständlich können an einer als Bediengerät ausgebildeten Komponente auch andere Parameter neben der Raumtemperatur, wie Luftqualität, Zeitprofil oder dergleichen eingestellt werden. Das Bediengerät kann vorzugsweise zumindest ein Funkmodul, vorzugsweise zumindest einen Sensor beispielsweise für die Messung der Lufttemperatur oder der Luftfeuchte sowie vorzugsweise einen Identifikationstaster aufweisen. Es bietet sich an, wenn ein Display und vorzugsweise auch eine Energieversorgung in Form einer Batterie oder einer Solareinrichtung vorgesehen ist.

Bei der Messeinrichtung kann es sich beispielsweise um eine Temperaturmesseinrichtung, eine den CO₂-Gehalt oder den Gehalt an flüchtigen organischen Bestandteilen messende Messeinrichtung, eine den Feuchtigkeitsgehalt messende Messeinrichtung, eine Volumenstrommesseinrichtung, eine Messeinrichtung zur Ermittlung der Klappenstellung, des Kanaldrucks oder der Ventilstellung bei Wasser/Luftsystemen handeln.

Die Messeinrichtung kann in dem Raum, in einer Komponente und/oder in dem Bediengerät selbst installiert sein. Die Messeinrichtung kann dabei kabel- bzw. drahtlos, insbesondere funkbasiert, mit der entsprechenden Regeleinrichtung einer Komponente in Verbindung sein.

Zumindest eine Komponente, insbesondere zumindest eine als Bediengerät ausgebildete Komponente, kann eine Einrichtung für die optische und/oder akustische Bestätigung einer hergestellten Zuordnung aufweisen. Ist die Zuordnung hergestellt worden, ergeht eine optische und/oder akustische Bestätigung.

Zumindest eine Komponente, vorzugsweise eine als Bediengerät ausgebildete Komponente, kann eine, insbesondere Verbrauchsdaten, speichernde Speichereinrichtung aufweisen. Damit können die entsprechenden Daten, wie Verbrauchsdaten, dieses Raumes auf der Speichereinrichtung hinterlegt werden und sind damit jederzeit abrufbar.

Auf diese Weise ist eine Abrechnungsfunktionalität dahingehend gewährleistet, dass für die betreffende Zone eine separate Abrechnung des Energieverbrauchs möglich ist. Die Verbrauchsdaten können für den entsprechenden Raum oder die Zone in dem Raumbediengerät hinterlegt werden. Eine spätere Ablesung über eine Anzeigeeinrichtung ist möglich. Zumindest eine Komponente, vorzugsweise eine als Bediengerät ausgebildete Komponente, kann eine Übertragungseinrichtung und/oder Schnittstelle zur Übertragung von Daten, insbesondere von Verbrauchsdaten, aufweisen. Damit ist beispielsweise eine separate Ablesung zu jedem beliebigen Zeitraum möglich. Vorzugsweise besteht eine Funkverbindung zwischen der betreffenden Komponente und beispielsweise einem Computer. Auf eine Abfrage hin werden über die der betreffenden Komponente zugeordnete Übertragungseinrichtung die abgefragten Daten an die anfragende Stelle übertragen. Damit ist eine Ablesung über eine Schnittstelle oder eine Funkverbindung möglich.

Die Erfindung bietet sich zur Bildung von Kommunikationsgruppen auch auf unterschiedlichen Ebenen, d.h. "Hierarchien", an. So kann sich das System beispielsweise auf die Raumebene beschränken. In diesem Fall besteht das System beispielsweise aus einem Raumbediengerät, aus einem Abluft- sowie aus einem Zuluftvolumenstromregler.

Insbesondere in mehrgeschossigen Gebäuden können beispielsweise mehrere Räume wiederum untereinander zu einer Kommunikationsgruppe "einer höheren Ebene", d.h. Hierarchie, zusammengefasst sein. Eine solche Kommunikationsgruppe kann beispielsweise einen zentralen Zuluftventilator und mehrere mit dem zentralen Zuluftventilator zusammenwirkende raumseitige Zuluftventilatoren oder Zuluftklappen aufweisen.

Damit ermöglicht das erfindungsgemäße Anlagesystem eine Zuordnung von Komponenten zu verschiedenen "Hierarchien". So kann auf Raumebene beispielsweise eine als Raumbediengerät ausgebildete Komponente sowie Raumzuluftregler und Raumabluftregler einer Kommunikationsgruppe zugeordnet sein.

Gleichzeitig können diese Raumzuluftregler und Raumabluftregler und eine weitere Komponente, wie beispielsweise ein Ventilator, einer Kommunikationsgruppe einer höheren Ebene zugeordnet sein. Hierfür würde jede dieser Komponenten eine Kommunikationskennung aufweisen, die eine entsprechende Zuordnung zu einer Kommunikationsgruppe dieser Hierarchie erlaubt.

Bei einer funktionalen Kommunikationskennung wird eine Zuordnung einer Komponente zu einer Kommunikationsgruppe einer falschen Hierarchie verhindert. So stellt regelmäßig beispielsweise ein Frequenzumformer eines Ventilators eine Komponente einer höheren Ebene dar, so dass durch die funktionale Kommunikationskennung eine Zuordnung zu einer Kommunikationsgruppe auf "Raumebene" unterbunden wird.

Selbstverständlich kann es sich um eine Kommunikationsgruppe sowohl innerhalb eines zentralen als auch eines dezentralen Anlagesystems handeln.

Bei einer Komponente kann es sich beispielsweise um einen Abluft- oder Zuluftregler, um einen Abluft- oder Zuluftventilator, um eine Klappe jeglicher konstruktiver Ausgestaltung und Funktion, um eine Mischbox, in der Kalt- und Warmluft gemischt wird, oder dergleichen handeln. Bei den Komponenten kann es sich auch um andere Bauteile eines klima- und raumlufttechnischen Anlagesystems, wie beispielsweise um Ventilatoren, Frequenzumformer, Bedieneinheiten, Volumenstromregler, Durchlässe mit Antrieben, Ventiltriebe oder andere Aktoren sowie um komplette Fassadenlüftungsgeräte, wie dezentrale Geräte, handeln.

Bei dem erfindungsgemäßen Anlagensystem können beispielsweise alle als Zuluftvolumenstromregler ausgebildeten Komponenten mit dem als zentrale Versorgungseinrichtung ausgebildeten Zuluftventilator zu einer Kommunikationsgruppe zugeordnet werden.

Eine entsprechende Kommunikationsgruppe kann auch bei den als Abluftregler ausgebildeten Komponenten und einem als zentrale Versorgungseinrichtung ausgebildeten Abluftventilator erzeugt werden. Damit enthält der zentrale Abluftventilator beispielsweise Informationen darüber, welche Abluftvolumenstromregler ihm zugeordnet sind, so dass beispielsweise in Abhängigkeit der Leistung des Abluftventilators eine entsprechende Regelung der Abluftvolumenstromregler vorgenommen werden kann.

Für eine optimale Betriebsweise benötigen Volumenstromregler üblicherweise einen gewissen Volumenstrom, der - sofern es sich um einen Zuluftvolumenstrom handelt - von dem Zuluftventilator bereitgestellt wird. Das erfindungsgemäße System ermöglicht, dass die Volumenstromregler die Leistung der mit diesem Volumenstromregler zusammenwirkenden Zuluftventilatoren beeinflussen können. Hierzu ist in jedem Volumenstromregler beispielsweise ein Volumenstrommesser vorgesehen.

Damit ist eine energieoptimierte Steuerung/Regelung möglich, da im Rahmen einer Kommunikationsgruppe beispielsweise einem Zuluftventilator die entsprechenden Zuluftvolumenstromregler dieser Zone zugeordnet werden können und eine Anpassung an den tatsächlich benötigten Bedarf möglich ist. Es ist nicht erforderlich, dass beispielsweise der Zuluftventilator Informationen darüber hat, wo die ihm zugeordneten Volumenstromregler innerhalb der kompletten Lüftungsanlage angeordnet sind. Wichtig ist lediglich, dass der zentrale Zuluftventilator Informationen darüber hat, welche Zuluftvolumenstromregler ihm zugeordnet sind.

Es bietet sich an, wenn an zumindest einer der beiden zu verbindenden Komponenten, vorzugsweise an der ersten Komponente, eine als Identifikationstaster ausgebildete Konfigurationseinrichtung vorgesehen ist. Damit wird an der betreffende Komponente manuell das Senden des Signals bzw. die Empfangsbereitschaft zum Zwecke der Zuordnung aktiviert.

Zumindest die erste Komponente kann als Bediengerät ausgebildet sein. Selbstverständlich kann(können) einem Bediengerät ein oder mehrere Komponenten zugeordnet werden. Zumindest ein Bediengerät kann als Raumbediengerät ausgebildet sein.

Es ist selbstverständlich möglich, dass zumindest eine Komponente einer Kommunikationsgruppe zusätzlich noch mit einer eventuell vorhandenen bauseitigen Gebäudeleittechnik verbunden ist.

Eine Komponente kann als Versorgungseinrichtung, insbesondere als zentraler Zuluft- oder Abluftventilator, ausgebildet sein.

Im Folgenden werden in den Zeichnungen dargestellte Ausführungsbeispiele der Erfindung erläutert. Es zeigen:
- Fig. 1: eine erste Variante des erfindungsmäßen Verfahrens,
- Fig. 2: eine zweite Variante des erfindungsmäßen Verfahrens,
- Fig. 3: eine dritte Variante des erfindungsmäßen Verfahrens und
- Fig. 4: ein Ausführungsbeispiel eines erfindungsmäßiges Systems.

In allen Figuren werden für gleiche bzw. gleichartige Bauteile übereinstimmende Bezugszeichen verwendet.

In den Fig. 1-3 sind jeweils fünf Komponenten K1 bis K5 dargestellt, wobei jeder Komponente K1 bis K5 eine Speichereinrichtung 9 zugeordnet ist. Vor Beginn jeder Zuordnung ist- wie in den Fig. 1a-3a dargestellt - jede Speichereinrichtung 9 noch leer. Jeder Komponente K1 bis K5 ist eine Identifikationsnummer zugeordnet.

Bei dem Verfahrensablauf nach Fig. 1 wird - wie in Fig. 1 b dargestellt - vor der eigentlichen Zuordnung zur zu bildenden Kommunikationsgruppe ein Impuls 10 an der Komponente K1 erzeugt, infolgedessen ein Signal 11 ausgesendet wird. Damit wird die Komponente K1 aktiviert und sendet die Bereitschaft zum Aufbau einer Kommunikationsgruppe mittels eines Telegrammes BCG-K1 (Built Communication Group-K1) als Signal 11, beispielsweise per Broadcast, an alle Komponenten K2 bis K5. Dieses Signal 11 kann ständig oder zyklisch gesendet werden.

Bei einem Broadcast handelt es sich um eine Nachricht, bei der Datenpakete von einem Punkt aus an alle Komponenten des betreffenden Netzes übertragen werden können. Die Verwendung eines Broadcasts bietet sich an, wenn die Adresse der empfangenen Komponente noch unbekannt ist. Durch einen Broadcast ist eine einfache Übermittlung von Informationen an alle Komponenten eines Netzes möglich, so dass eine entsprechende Übertragung an jede einzelne Komponente des klima- und raumlufttechnischen Anlagesystems nicht mehr erforderlich ist.

Die Komponenten K2 bis K5 empfangen durch ihre jeweilige nicht dargestellte Empfangseinrichtung das Signal 11, dass sie nunmehr der zu bildenden Kommunikationsgruppe an die Komponente K1 beitreten können. Das von der Komponente K1 ausgesendete Signal 11 signalisiert also die Bereitschaft eines Beitritts zu einer Kommunikationsgruppe.

In den Fig. 1 c und 1 d ist das erfindungsgemäße Verfahren am Beispiel der Zuordnung der Komponente K3 bzw. der Komponente K5 dargestellt. Die Komponente K3 bzw. die Komponente K5 empfängt das von der Komponente K1 ausgesendete Signal 11. Durch einen Impuls 10 an der Komponente K3 bzw. K5 wird der Beitritt zur Kommunikationsgruppe an die Komponente K1 initiiert. Dies kann beispielsweise durch einen Tastenimpuls erfolgen. Die Komponente K3 bzw. K5 sendet an die Komponente K1 ein Signal 11 in Form eines Beitrittstelegramms, das in dem dargestellten Beispiel als ACG-K3 bzw. ACG-K5 (Acknowledge Communcation Group-K3 bzw. Acknowledge Communcation Group-K5) bezeichnet ist.

Die Komponente K1 empfängt das Telegramm und speichert die betreffende Zuordnung zu der Komponente K3 bzw. zu der Komponente K5 in seiner Speichereinrichtung 9 ab.

In Fig. 1 e ist ein mögliches Ende des Kommunikationsgruppenaufbaus dargestellt. In dem dargestellten Ausführungsbeispiel wird durch einen Impuls 12 an der Komponente K5 der Zuordnungsprozess beendet. Dazu sendet die Komponente K5 an die Komponente K1 ein Signal 13 in Form eines Telegramms TCG-K1 (Terminate Communication Group-K1) aus. Die Komponente K1 empfängt das Telegramm und beendet den Zustand des Kommunikationsgruppenaufbaus. Infolgedessen wird das Aussenden des Telegramms BCG-K1 (Signals 11) eingestellt.

Wie Fig. 1 e zu entnehmen ist, ist die Kommunikationsgruppenzughörigkeit nach Beendigung des Zuordnungsprozesses nur in der Einstellung, d.h. der Speichereinrichtung 9, der Komponente K1 festgelegt. So ist in der Speichereinrichtung 9 der Komponente K1 die Zuordnung der Komponenten K3 und K5 abgelegt.

In Fig. 2 ist eine Alternative des erfindungsgemäßen Verfahrens nach Fig. 1 dargestellt. Auch hier sendet die Komponente K1 ein Telegramm BCG-K1 als Signal 11 aus.

Durch einen Impuls 10, z.B. einen Tastenimpuls, an der Komponente K3 bzw. an der Komponente K5 wird der Beitritt zur Kommunikationsgruppe von der Komponente K1 initiiert. Die Einstellung zur Zuordnung zu dieser Kommunikationsgruppe wird in der zugeordneten zweiten Komponente, d.h. vorliegend in der Speichereinrichtung 9 der Komponente K3 bzw. in der Speichereinrichtung 9 der Komponente K5, hinterlegt. Damit vermerken sich die Komponente K3 und die Komponente K5 in ihrer jeweiligen Speichereinrichtung 9 die Komponente K1 als Teilnehmer der Kommunikationsgruppe.

In Fig. 2 e ist die Beendigung des Kommunikationsgruppenaufbaus dargestellt. Bei dem dargestellten Ausführungsbeispiel kann beispielsweise durch die Erzeugung eines Impulses 12, z.B. eines Tastenimpulses, an der Komponente K1 der Aufbau beendet werden. Das Senden des Telegramms BCG-K1 als Signal 11 wird daraufhin eingestellt.

Der Vorgang kann auch durch eine zeitlich begrenzte Bereitschaft zum Aufbau der Kommunikationsgruppe selbständig beendet werden. Der oben beschriebene Ablauf kann alternativ auch von jeder anderen Komponente beendet werden. Dazu ist eine Kommunikation von der Komponente, von der aus die Zuordnung abgebrochen werden soll, zum initiierenden Teilnehmer, hier der Komponente K1, erforderlich.

Wie Fig. 2 e zu entnehmen ist, ist die Kommunikationsgruppenzughörigkeit von der Komponente K1 nach Beendigung des Zuordnungsprozesses in der jeweiligen Einstellung der Komponente K3 bzw. der Komponente K5 festgelegt.

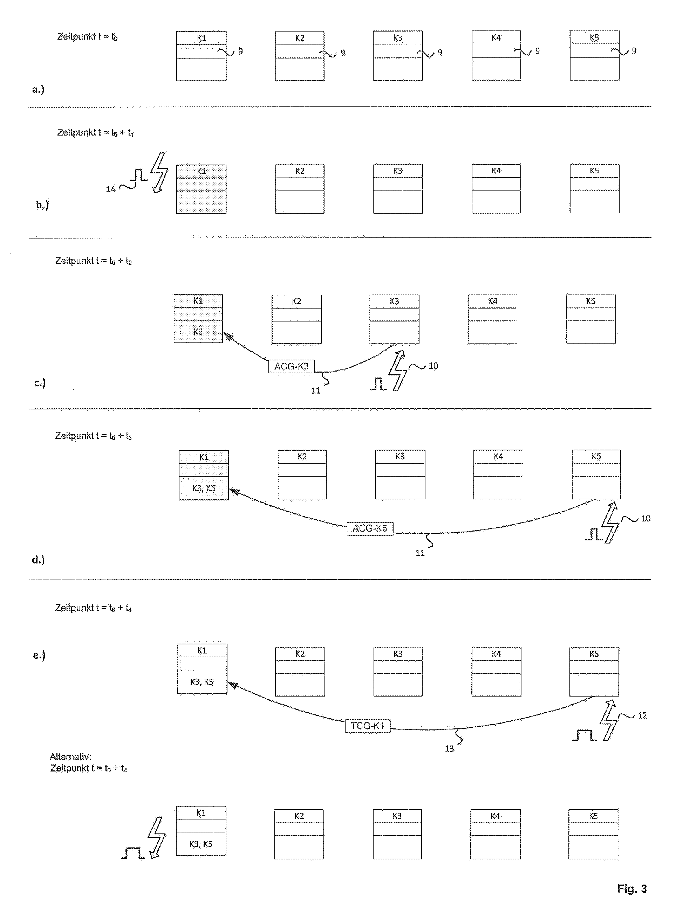

In Fig. 3 ist eine weitere alternative Ausgestaltung des erfindungsgemäßen Verfahrens dargestellt. Hier wird die Komponente K1 durch einen Impuls 14, wie z.B. einen Tastenimpuls, in ihre Empfangsbereitschaft zum Aufbau einer Kommunikationsgruppe gesetzt.

Bei der Zuordnung beispielsweise der Komponente K3 wird an der Komponente K3 ein Impuls 10 zum Beitritt zur Kommunikationsgruppe an die Komponente K1 initiiert. Die Komponente K3 sendet an die Komponente K1 ein Beitrittsbestätigungstelegramm ACG-K3 als Signal 11 aus. Die Komponente K1 empfängt das Telegramm und speichert die Komponente K3 in ihrer Speichereinrichtung 9 als Teilnehmer zur Kommunikationsgruppe ab. Die Zuordnung der Komponente K5 erfolgt gleichermaßen wie in Fig. 3 d dargestellt.

Der Kommunikationsgruppenaufbau kann - wie in Fig. 3 e dargestellt - an jeder beliebigen Komponente, beispielsweise an der Komponente K1, beendet werden. In Fig. 3 e wird an der Komponente K5 durch einen Impuls 12 z.B. durch einen Tastenimpuls, der Aufbau der Kommunikationsgruppe der Komponente K1 beendet. Dazu sendet die Komponente K5 an die Komponente K1 ein Signal 13 in Form eines Telegramms TCG-K1 (Terminate Communication Group-K1). Die Komponente K1 empfängt das Telegramm und beendet den Empfangszustand für den Kommunikationsgruppenaufbau.

Der Zustand des Kommunikationsgruppenaufbaus kann auch durch einen Impuls an einer Komponente beendet werden.

Alternativ kann - wie in der unteren Darstellung von Fig. 3 e verdeutlicht - der Zustand zum Aufbau einer Kommunikationsgruppe auch automatisch durch Ablauf einer beliebigen Zeit selbständig beendet werden.

Die in den Fig. 1-3 dargestellten Abläufe stellen nur den grundsätzlichen Ablauf dar. Die zur technischen Realisierung erforderliche Gesamtkommunikation inklusive Quittierung, Zustandsspeicherung und Verriegelung sind nicht im Detail dargestellt.

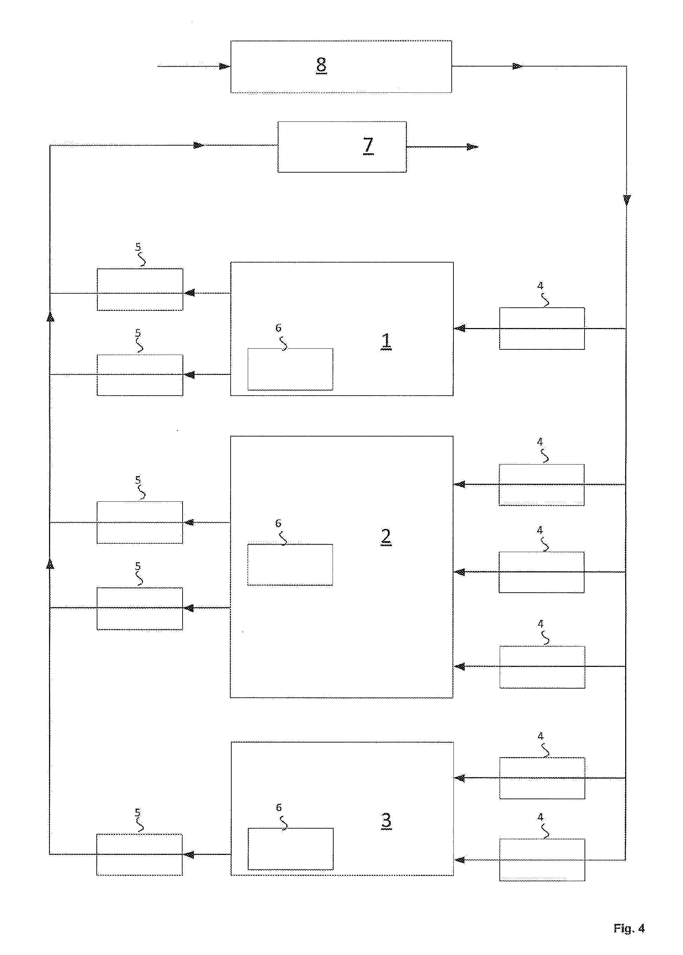

Figur 4 zeigt ein Ausführungsbeispiel eines erfindungsmäßiges Systems. Wie der Figur zu entnehmen ist, umfasst das dargestellte Anlagesystem insgesamt drei jeweils als Kommunikationsgruppen ausgebildete Räume 1-3. Jede dieser drei Kommunikationsgruppen befindet sich auf "Raumebene". Die Raumebene stellt innerhalb des dargestellten Lüftungssystems die Ebene mit der untersten Hierarchie dar.

Dem Raum 1 ist eine als Zuluftvolumenstromregler 4 ausgebildete Komponente sowie zwei als Abluftvolumenstromregler 5 ausgebildete Komponente zugeordnet. Zur Steuerung der Abluftvolumenstromregler 5 und des Zuluftvolumenstromreglers 4 dieses Raumes 1 ist eine als Raumbediengerät 6 ausgebildete weitere Komponente vorgesehen.

In dem Raum 2 sind neben einer als Raumbediengerät 6 ausgebildeten Komponente insgesamt drei Zuluftvolumenstromregler 4 und zwei Abluftvolumenstromregler 5 vorgesehen. Dem Raum 3 sind neben einer als Raumbediengerät 6 ausgebildeten Komponente zwei Zuluftvolumenstromregler 4 und ein Abluftvolumenstromregler 5 zugeordnet.

Die Abluftvolumenstromregler 5 aller drei Räume 1 bis 3 bilden zusammen mit einer als zentralen Abluftventilator 7 ausgebildeten Versorgungseinrichtung ein weiteres System einer übergeordneten Ebene, d.h. einer höheren "Hierarchie". Damit sind die Abluftvolumenstromregler 5 jeweils zwei Kommunikationsgruppen unterschiedlicher Hierarchien, nämlich der Raumebene und einer übergeordneten Ebene, zugeordnet.

Auch die sechs Zuluftvolumenstromregler 4 sind neben der Raumebene einer übergeordneten Ebene zugeordnet. So bilden die sechs Zuluftvolumenstromregler 4 der drei Räume 1 bis 3 zusammen mit einer als zentraler Zuluftventilator 8 ausgebildeten Versorgungseinrichtung eine weitere in Bezug zur Raumebene übergeordnete Kommunikationsgruppe.

Sollen beispielsweise auf der Raumebene des Raumes 1 die Kommunikationswege zwischen dem Zuluftvolumenstromregler 4, den zwei Abluftvolumenstromreglern 5 und dem Raumbediengerät 6 zu einer noch zu bildenden Kommunikationsgruppe zugeordnet werden, wird an einer der vier zu dieser einen Kommunikationsgruppe zuzuordnenden Komponenten (einem Zuluftvolumenstromregler 4, zwei Abluftvolumenstromregler 5 oder einem Raumbediengerät 6) der Zuordnungsprozess beispielsweise durch Drücken eines entsprechenden Tasters an einer der vier Komponenten angestoßen. Von dieser betreffenden sendenden Komponente wird daraufhin ein Signal ausgesandt.

Anschließend werden dieser sendenden Komponente nacheinander die drei weiteren Komponenten zur Bildung einer Kommunikationsgruppe zugeordnet. Dies kann beispielsweise durch Drücken eines entsprechenden Tasters an den zuzuordnenden Komponenten oder durch eine andere geeignete Maßnahme erfolgen.

Nachdem die Zuordnung der drei weiteren Komponenten zu der das Signal sendenden Komponente beendet ist, wird der Vorgang beispielsweise an der sendenden Komponente wieder gestoppt. Selbstverständlich kann der Vorgang auch an einer anderen Komponente gestoppt werden. Es ist auch möglich, dass das Aussenden des Signals bei der sendenden Komponente von vorneherein zeitlich beschränkt ist, so dass das Aussenden nach Ablauf der vorgegebenen Zeitdauer automatisch gestoppt wird.

Auf diese Weise sind alle vier Komponenten in der Raumebene des Raumes 1 untereinander verbunden, so dass jede der vier Komponenten mit jeder anderen Komponente dieser Kommunikationsgruppe kommunizieren kann.

Der in der Raumebene des Raumes 1 zugeordnete Zuluftvolumenstromregler 4 kann auf folgende Weise auch noch der übergeordneten Ebene zugeordnet werden, wobei die Zuordnung zu dieser übergeordneten Ebene gleichermaßen erfolgt. Auch hier wird beispielsweise an einer der sieben Komponenten (sechs Zuluftvolumenstromregler 4, ein Zuluftventilator 8), die zu der übergeordneten Kommunikationsgruppe zusammengefasst werden sollen, der Zuordnungsprozess angestoßen und die anderen Komponenten dieser zu bildenden Kommunikationsgruppe entsprechend zugeordnet. Dann ist beispielsweise in dem zentralen Zuluftventilator 8 auch die Information hinterlegt, dass der Zuluftventilator 8 mit insgesamt sechs Zuluftvolumenstromreglern 4 zusammenwirkt.

## Patentansprüche

1. Verfahren zur Zuordnung eines Kommunikationsweges zwischen zwei Komponenten eines klima- und raumlufttechnischen Anlagesystems zu einer, insbesondere erst noch zu bildenden, Kommunikationsgruppe, **dadurch gekennzeichnet, dass** zumindest die zwei Komponenten zu einer Kommunikationsgruppe zusammengefasst werden, innerhalb der jede der Kommunikationsgruppe zugeordnete Komponente mit wenigstens einer anderen Komponente dieser Kommunikationsgruppe in wenigstens einer Richtung, vorzugsweise bidirektional, kommunizieren kann, wobei die Bereitschaft eines Beitritts zu einer Kommunikationsgruppe bei den beiden Komponenten gegeben ist und dass an einer der zwei Komponenten, die der vorgenannten Kommunikationsgruppe zugeordnet werden soll, durch einen Impuls (10), z.B. Tastenimpuls, die Zuordnung zur insbesondere zu bildenden Kommunikationsgruppe initiiert wird, die Kommunikationsgruppenzughörigkeit in der Einstellung der ersten der zwei Komponenten und/oder der Einstellung der zweiten der zwei Komponenten festgelegt wird.

2. Verfahren nach dem vorhergehenden Anspruch, **dadurch gekennzeichnet, dass** vor der eigentlichen Zuordnung zur, insbesondere zu bildenden, Kommunikationsgruppe durch den Impuls (10) zumindest eine Komponente ein Signal (11) aussendet, das die Bereitschaft eines Beitritts zu einer Kommunikationsgruppe, welche diese sendende Komponente umfasst, erklärt.

3. Verfahren nach Anspruch 2, **dadurch gekennzeichnet, dass** das Aussenden des Signals (11), vorzugsweise an der sendenden, Komponente optisch und/oder akustisch angezeigt wird.

4. Verfahren nach einem der vorhergehenden Ansprüche, **dadurch gekennzeichnet, dass** nach Abschluss der Zuordnung aller gewünschten Komponenten zu einer zu bildenden Kommunikationsgruppe an einer der dieser Kommunikationsgruppe zugeordneten Komponente, vorzugweise an der sendenden Komponente, das Aussenden des Signals 11 durch einen Impuls (12), insbesondere Tastenimpuls, gestoppt wird.

5. Verfahren nach einem der vorhergehenden Ansprüche, **dadurch gekennzeichnet, dass** nach Abschluss der Zuordnung aller gewünschten Komponenten zu einer zu bildenden Kommunikationsgruppe an einer Komponente, vorzugweise an der sendenden Komponente, die Bereitschaft eines Beitritts zu einer Kommunikationsgruppe durch einen Impuls (12), insbesondere Tastenimpuls, gestoppt wird.

6. Verfahren nach einem der vorhergehenden Ansprüche, **dadurch gekennzeichnet, dass** die Verbindung zwischen zwei Komponenten drahtlos, insbesondere funkbasiert, ausgebildet ist.

7. Verfahren nach einem der vorhergehenden Ansprüche, **dadurch gekennzeichnet, dass** zumindest eine Komponente wenigstens eine bei der Durchführung des Zuordnungsprozesses abgefragte und für die Ermöglichung einer Zuordnung relevante funktionale Kommunikationskennung aufweist und dass weiterhin eine weitere Komponente, mit der eine Zuordnung erfolgen soll, eine Speichereinrichtung (9) mit einer kompatiblen Kommunikationskennung beinhaltet und die Zuordnung von der ersten und/oder der weiteren Komponente nur ausgeführt wird, sofern zwischen der Kommunikationskennung der ersten Komponente und der in der Speichereinrichtung der weiteren Komponente hinterlegten Kommunikationskennung Übereinstimmung besteht.

8. Verfahren nach dem vorhergehenden Anspruch, **dadurch gekennzeichnet, dass** an einer Komponente die für die aktuelle Zuordnung zu einer Kommunikationsgruppe zu verwendende Kommunikationskennung einstellbar ist.

9. Verfahren nach einem der vorhergehenden Ansprüche, **dadurch gekennzeichnet, dass** an zumindest einer weiteren Komponente die soeben erfolgte Zuordnung dieser weiteren Komponente zu einer Kommunikationsgruppe optisch und/oder akustisch signalisiert wird.

10. Verfahren nach einem der vorhergehenden Ansprüche, **dadurch gekennzeichnet, dass** zumindest eine Komponente mit einer Regeleinrichtung versehen ist.

11. Verfahren nach einem der vorhergehenden Ansprüche, **dadurch gekennzeichnet, dass** zumindest eine Komponente, vorzugsweise eine als Bediengerät ausgebildete Komponente, eine, insbesondere Verbrauchsdaten, speichernde Speichereinrichtung (9) aufweist.

12. Verfahren nach einem der vorhergehenden Ansprüche, **dadurch gekennzeichnet, dass** zumindest eine Komponente, vorzugsweise eine als Bediengerät ausgebildete Komponente, eine Übertragungseinrichtung und/oder Schnittstelle zur Übertragung von Daten, insbesondere von Verbrauchsdaten, aufweist.
